# EUROPEAN PATENT SPECIFICATION

(11) **EP 3 428 347 B1**
(45) Date of publication and mention of the grant of the patent: **10.03.2021**
(21) Application number: 17762670.2
(22) Date of filing: 05.01.2017
(51) Int. Cl.: E02F 9/00, E02F 3/32, E02F 9/08, F15B 1/26, G01F 23/00, B60K 15/03, G01F 23/02

(54) **SMALL HYDRAULIC SHOVEL WITH LEVEL GAUGE FOR THE HYDRAULIC FLUID TANK**
KLEINER HYDRAULIKSCHAUFELBAGGER MIT FÜLLSTANDANZEIGE FÜR DEN HYDRAULIKFLÜSSIGKEITSBEHÄLTER
PETITE PELLE HYDRAULIQUE AVEC INDICATEUR DE NIVEAU POUR LE CONTENEUR DU FLUIDE HYDRAULIQUE

(30) Priority: 07.03.2016 JP 2016043507
(43) Date of publication of application: 16.01.2019
(73) Proprietor: Hitachi Construction Machinery Tierra Co., Ltd., Koka-shi, Shiga 528-0061 (JP)
(72) Inventor: ASHIDA, Tomoaki, Koka-shi Shiga 528-0061 (JP); KAWAMOTO, Junya, Koka-shi Shiga 528-0061 (JP); TABETA, Hiroshi, Koka-shi Shiga 528-0061 (JP); SUMINO, Tetsuya, Koka-shi Shiga 528-0061 (JP)
(74) Representative: Manitz Finsterwald Patent- und Rechtsanwaltspartnerschaft mbB
(86) International application number: PCT/JP2017/000179
(87) International publication number: WO 2017/154323

(56) References cited:
- EP-A1- 2 679 727
- JP-A- 2002 088 805
- JP-A- 2006 321 294
- JP-A- 2007 090 953
- JP-B2- 5 566 318
- JP-U- S60 140 843
- JP-U- S60 161 831
- JP-U- S60 161 831
- KR-A- 20080 112 765

## Description

### TECHNICAL FIELD

The present invention relates to a small-sized hydraulic excavator which operates at such working sites as building premises and narrow housing lots, more particularly, to a small-sized hydraulic excavator having an area in which various equipment and machinery, structural members arranged on a revolving upperstructure are disposed narrower, and being subject to restrictions particularly on the disposition of a hydraulic oil tank, since widths of a travel base and the revolving upperstructure are restricted, the travel base being provided with crawler type travel apparatuses within such a base width as enabling such travel base to pass through narrow passages, the revolving upperstructure being turnably mounted on the upper part of the travel base, and being provided with a cab.

### BACKGROUND ART

There is prior disclosure on such a small-sized hydraulic excavator as mentioned above in Patent Literature 1 below. In detail, there is disclosure in Patent Literature 1 on a small-sized hydraulic excavator which operates at such working sites as building premises and narrow housing lots, more particularly, to a small-sized hydraulic excavator called as a mini excavator having an area in which various equipment and machinery, structural members arranged on a revolving upperstructure are disposed narrower, and being subject to restrictions particularly on the disposition of a hydraulic oil tank, since widths of a travel base and the revolving upperstructure are restricted, the travel base being provided with crawler type travel apparatuses within such a base width as enabling such travel base to pass through narrow passages, the revolving upperstructure being turnably mounted on the upper part of the travel base, and being provided with a cab.

This prior small-sized excavator comprises a travel base provided with a pair of right and left crawler type travel apparatuses; a revolving upperstructure disposed on the travel base such that it is turnable; and a working machine (such as a boom, an arm, a bucket, a boom cylinder, an arm cylinder, a bucket cylinder and the like) attached to a right and left swinging swing post disposed on a frontal end frame portion protruding forward from the revolving frame of the revolving upperstructure such that the working machine is vertically rotatable. A cab (driver's cabin) is disposed on the revolving frame of the revolving upperstructure from the tip end side of the revolving frame to its rear side beyond a center at which the revolving frame revolves and the width of the cab with respect to its right and left direction (the width between the right and left side faces of the cab) is the same or approximately the same as the width of the above-mentioned travel base provided with a pair of right and left crawler type travel apparatuses. Such tanks as a hydraulic oil tank and a fuel tank as well as a group of switching valves comprising a plurality of directional control valves are disposed from the vicinity of the center of the revolving frame within the cab to its rear side and behind such equipment and machinery an engine, a hydraulic pump, a heat exchanger composed of a radiator and an oil cooler etc. and the like are disposed. A counterweight whose outer circumference takes an arch shape and with which such working machine is counterbalanced is disposed at the revolving frame behind the cab. Further, an outer cover is attached to the revolving frame behind the cab such that the outer cover surrounds such tanks as the hydraulic oil tank and the fuel tank, an engine, a hydraulic pump and a heat exchanger composed of a radiator and an oil cooler etc. from the vicinity of the center of the cab to the counterweight. This outer cover is disposed from the right and left side faces of the cab to its rear side, in which the width of the right and left sides of the outer cover is the same or approximately the same as that of the above-mentioned travel base provided with the pair of right and left crawler type travel apparatuses in the same way as the width between the right and left side faces of the cab. Above the engine, the hydraulic pump and the heat exchanger composed of a radiator and an oil cooler etc. within the cab, a partitioning plate forming an engine room along with the outer cover is disposed continuously from a floor disposed in front of the cab and a driver's seat is mounted on the partitioning plate. The hydraulic oil tank is positioned below the partitioning plate within the cab and mounted on the revolving frame of the revolving upperstructure as well as is disposed with a certain clearance with the outer cover. A hydraulic oil supplied to the respective actuators of the hydraulic driving system for driving the travel base, the revolving upperstructure and the working machine is received in the hydraulic oil tank.

A level gauge which regulates the volume of the hydraulic oil received in the hydraulic oil tank and whose inside is hollow is provided on the hydraulic oil tank such that the level gauge is opposed to a checking hole formed on one side face of the right and left side faces of the outer cover (e.g. the side face opposed to an entrance door disposed on one side face of the cab). This level gauge includes a circular protruding portion jutting out of the side face of the hydraulic oil tank to secure the volume of the hydraulic oil tank as large as possible; and a window which is provided on the outer cover side face of the protruding portion and is made from a transparent member which enables the top surface of the hydraulic oil received in the corresponding tank to be visually checked through the checking hole formed on the outer cover.

### CITATION LISTPATENT LITERATURE

PATENT LITERATURE 1: Japanese Patent Publication No. 5566318 Furthermore, EP 2 679 727 A1 discloses a small-sized hydraulic excavator in accordance with the preamble of claim 1.

### SUMMARY OF THE INVENTION - TECHNICAL PROBLEM

The small-sized hydraulic excavator such as the above-mentioned mini excavator has restriction in the width of its travel base and revolving upperstructure respectively such that it is fit to a cramped working space, so that an error upon assembly resulting from mounting a number of parts and members within the limited and crumped area of the cab on the revolving frame constituting the revolving upperstructure might cause the window of the level gauge to slightly protrude from the checking hole of the outer cover. With the small-sized hydraulic excavator assembled as above, it facilitates the volume of the hydraulic oil received in the hydraulic oil tank to be readily checked, but there is apprehension that an external force might be applied to the window of the level gauge by such window making into contact with the branches and twigs of the hedging trees planted in the neighboring houses upon such excavator being operated at a housing lot where there are lined a number of houses adjacent to each other so as to make the level gauge damaged.

In order to solve the above-mentioned technical problem, the present invention is to provide a small-sized excavator capable of suppressing an external force arising upon excavation work from being applied to the level gauge provided on the hydraulic oil tank.

### SOLUTION TO PROBLEM

In order to solve the above-mentioned technical problem, the small-sized hydraulic excavator of the invention comprises the features of claim 1. Amongst other features the small-sized hydraulic excavator according to the present invention includes: a travel base; a revolving upperstructure disposed on the travel base; a working machine attached to a right and left swinging swing post disposed on a frontal end frame portion protruding forward from the revolving frame of the revolving upperstructure such that the working machine is vertically rotatable; a cab which is disposed on the revolving frame of the revolving upperstructure from a tip end side of the revolving frame to its rear side beyond a center at which the revolving frame revolves and a right and left width of which takes a widthwise shape along a width of the travel base; an outer cover which is disposed from a vicinity of a center of the cab to a counterweight disposed to a rear end of the revolving upperstructure on the revolving frame at the rear side of the cab, the outer cover forming an engine room; a hydraulic oil tank which is disposed on the revolving frame of the revolving upperstructure with a certain clearance with the outer cover of the revolving upperstructure and in which hydraulic oil to drive the travel base, the revolving upperstructure and the working machine is received; and a level gauge which is disposed on the hydraulic oil tank such that the level gauge is opposed to a checking hole formed on the outer cover and regulates a volume of the hydraulic oil received in the hydraulic oil tank and whose inside is hollow, the level gauge including a protruding portion jutting out from a side face of the hydraulic oil tank; and a window which is provided on a side face of the protruding portion on a side of the outer cover and enables a top surface of the hydraulic oil received in the hydraulic oil tank to be visually checked through the checking hole formed through the outer cover, in which the small-sized hydraulic excavator is provided with an attachment member to which the level gauge is attached; the attachment member is fixed on the side face of the hydraulic oil tank and is formed with a shape which surrounds a periphery of the protruding portion of the level gauge and is smaller than the checking hole formed through the outer cover; and the attachment member is provided such that an end face of the attachment member on the side of the outer cover is made flush with the side face of the protruding portion of the level gauge or protrudes from the side face of the protruding portion of the level gauge.

### ADVANTAGEOUS EFFECTS OF INVENTION

According to the small-sized hydraulic excavator of the present invention, the attachment member which is fixed on the side face of the hydraulic oil tank and to which the level gauge is attached is formed with a shape which surrounds the periphery of the protruding portion of the level gauge and the attachment member is provided such that its end face is made flush with the side face of the protruding portion of the level gauge or protrudes from the side face of the protruding portion of the level gauge, so that the attachment member receives external force arising upon excavation work, with the result that it suppresses such external force from being applied to the level gauge. In this way, according to the present invention, a highly reliable small-sized hydraulic excavator with the level gauge protected from such external force with higher precision than the conventional counterpart is provided.

### BRIEF DESCRIPTION OF DRAWINGS

[Fig. 1] Fig. 1 is a side view of the small-sized hydraulic excavator according to one embodiment of the present invention.
[Fig. 2] Fig. 2 is a side view showing the small-sized hydraulic excavator embodied in the present invention with the cab removed.
[Fig. 3] Fig. 3 is a plan view showing the small-sized hydraulic excavator embodied in the present invention with the cab removed.
[Fig. 4] Fig. 4 is a side view of the hydraulic oil tank provided on the small-sized hydraulic excavator embodied in the present invention.
[Fig. 5] Fig. 5 is an enlarged perspective view of the essential parts showing the positional relationship of the attachment member, the level gauge which are provided on the hydraulic oil tank illustrated in Fig. 4 with the checking hole of the outer cover.
[Fig. 6] Fig. 6 is an enlarged side view of the essential parts showing the positional relationship of the attachment member provided on the hydraulic oil tank illustrated in Fig. 4 with the outer cover.
[Fig. 7] Fig. 7 is a cross-sectional view showing the essential parts illustrated in Fig. 6.
[Fig. 8] Fig. 8 is a perspective view showing the state where the level gauge is attached to the attachment member provided on the small-sized hydraulic excavator embodied in the present invention.
[Fig. 9] Fig. 9 is a perspective view of the attachment member provided on the small-sized hydraulic excavator embodied in the present invention.
[Fig. 10] Fig. 10 is a perspective view showing the state where the attachment member and the level gauge protrude from the checking hole of the outer cover.
[Fig. 11] Fig. 11 is a side view showing the state where the attachment member and the level gauge protrude from the checking hole of the outer cover.

### DESCRIPTION OF EMBODIMENT

Hereafter, the embodiment of the small-sized hydraulic excavator according to the present invention is explained with reference to the accompanying drawings.

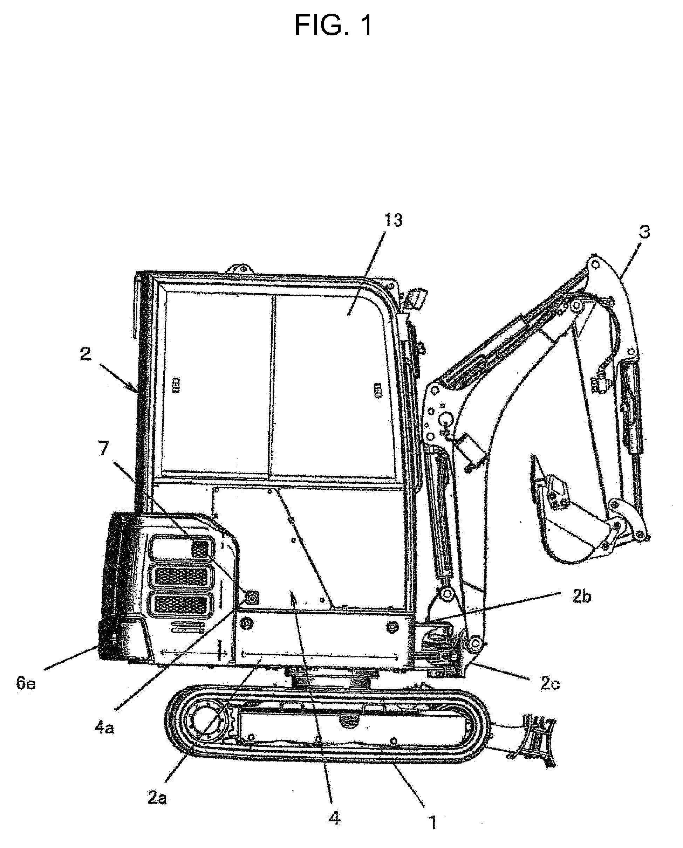

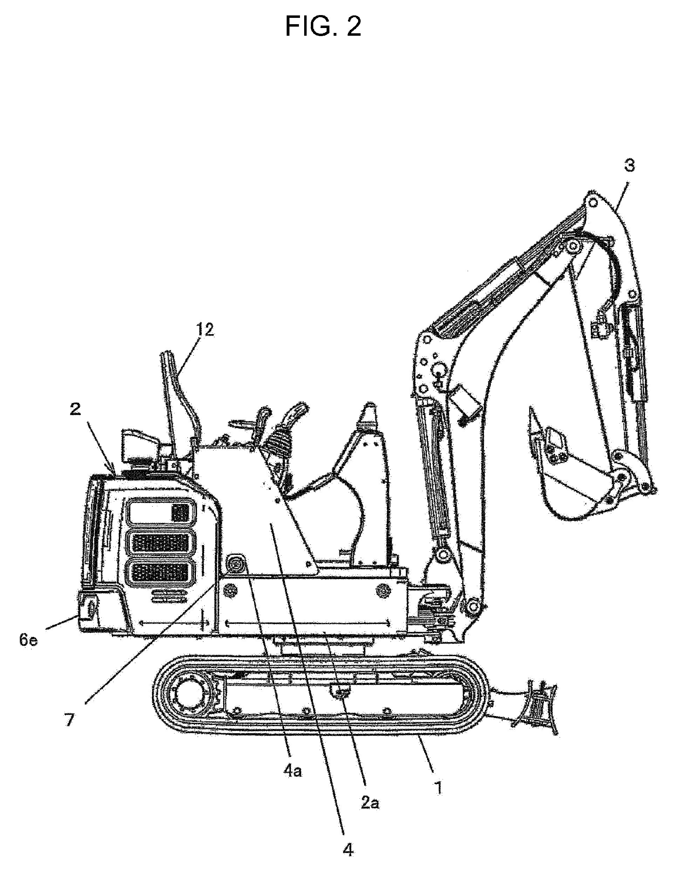

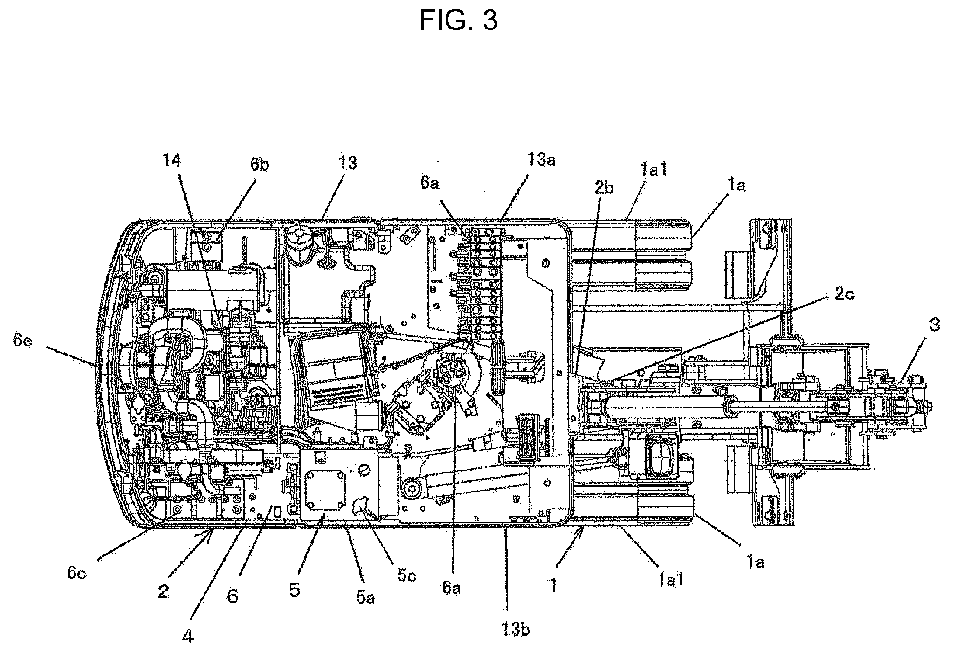

As illustrated in Figs. 1 to 3, the small-sized hydraulic excavator (a mini excavator being exemplified herein according to the present embodiment) includes: a travel base 1 provided with a pair of right and left crawler type travel apparatuses 1a; a revolving upperstructure 2 disposed on the travel base 1 such that it is turnable; and a working machine 3 (including a boom, an arm, a bucket, a boom cylinder, an arm cylinder and a bucket cylinder etc.) which is attached to a right and left swinging swing post 2c disposed on a frontal end frame portion 2b protruding forward from a revolving frame 2a of the revolving upperstructure 2 such that the working machine is vertically rotatable and carry out e.g. excavation work on soil and sand. A cab (driver's cabin) 13 is disposed on the revolving frame 2a of the revolving upperstructure 2 from the tip end side of the revolving frame 2a to its rear side beyond a center at which the revolving frame 2a revolves; and the right and left width of the cab 13 (namely, the width between a left-side face 13a and a right-side face 13b of the cab) is the same or approximately the same as the width of the above-mentioned travel base 1 provided with the pair of right and left crawler type travel apparatuses 1a or the right and left direction of the cab 13 takes a widthwise shape along the width of the travel base 1. As illustrated in Fig. 3, such tanks as a hydraulic oil tank 5 and a fuel tank 6 as well as a group of switching valves 6a including a plurality of directional control valves are disposed from the vicinity of the center (the vicinity of a center joint 6d) of the revolving frame 2a within the cab 13 to its rear side (up to the vicinity of an engine 14 mentioned below); and the engine 14, a hydraulic pump 6b, a heat exchanger 6c composed of a radiator and an oil cooler etc. and the like are disposed behind such equipment and machinery. A counterweight 6e whose outer circumference takes an arch shape and with which such the working machine 3 is counterbalanced is disposed at the revolving frame 2a at the rear side of the cab 13. Further, an outer cover 4 is attached to the revolving frame 2a at the rear side of the cab 13 from the vicinity of the center of the cab 13 to the counterweight 6e such that the outer cover 4 surrounds such tanks as the hydraulic oil tank 5 and the fuel tank 6, the engine 14, the hydraulic pump 6b and the heat exchanger 6c composed of a radiator, an oil cooler and the like. The outer cover 4 is disposed from the right and left sides of the cab 13 to its rear side, in which the width of the right and left side faces of the outer cover 4 is the same or approximately the same as that of the travel base 1 provided with the pair of right and left crawler type travel apparatuses 1a in the same way as the width between the left-side face 13a and the right-side face 13b of the cab 13. Above the engine 14, the hydraulic pump 6b and the heat exchanger 6c composed of a radiator and an oil cooler etc. within the cab 13, a partitioning plate (not shown in the drawings) forming an engine room along with the outer cover 4 is disposed continuously from a floor disposed in front of the cab 13 and a driver's seat 12 is mounted on the partitioning plate.

The hydraulic oil tank 5 is disposed with a certain clearance with the outer cover 4 on the revolving frame 2a of the revolving upperstructure 2 at the lower position of the partitioning plate within the cab 13 and along the right-side face of the outer cover 4. Hydraulic oil supplied to the respective actuators of a hydraulic driving system to drive the travel base 1, the revolving upperstructure 2 and the working machine 3 is received in the hydraulic oil tank 5.

As illustrated in Fig. 3, according to the present embodiment, the revolving upperstructure 2, the cab 13 and the outer cover 4 respectively have the same widthwise dimension as the widthwise dimension between the outer side portions 1a1 of the travel base 1 provided with the pair of right and left crawler type travel apparatuses 1a. Further, in response to the limited and narrow disposition space for the structural parts within the cab 13 and the outer cover 4, the above-mentioned engine 14, the hydraulic pump 6b, the heat exchanger 6c composed of a radiator and an oil cooler etc. are disposed in the above-mentioned engine room formed by the partitioning plate on which the driver's seat 12 is mounted.

Further, according to the small-sized hydraulic excavator embodied herein, as illustrated in Fig. 3, one end or the frontal end portion of the pair of right and left crawler type travel apparatuses 1a respectively constituting the travel base 1 is disposed up to the frontal positions of the cab 13 and the swing post 2c with protruding from the cab 13 and the swing post 2c when viewed from right above the cab 13. In this way, the maximum grounding supporting points of the pair of right and left crawler type travel apparatuses 1a to bear the load applied to the travel base 1 through the swing post 2c and the revolving frame 2a of the revolving upperstructure 2 during the operation of the working machine 3 are positioned forward with respect to the cab 13 and the swing post 2c, so that operation proceeds in a stable manner. Further, the other end or the rear end portion of the pair of right and left crawler type travel apparatuses 1a respectively is disposed below the counterweight 6e on the revolving frame 2a.

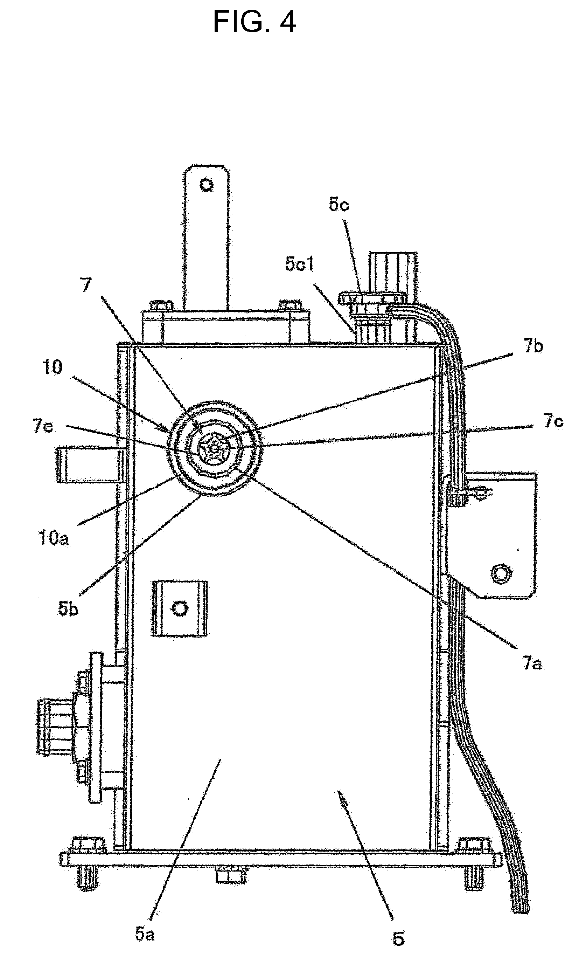

As illustrated in Fig. 4 to 6, the hydraulic oil tank 5 provided on the revolving frame 2a includes a cap 5c and a level gauge 7. The cap 5c is attached to an intake port 5c1 formed such that it protrudes upward from the upper side face of the hydraulic oil tank 5 and is opened upon the hydraulic oil being received and closed upon the completion of such oil being received. The level gauge 7 is disposed opposed to a checking hole 4a provided on one side face of the right and left side faces of the outer cover 4, which is the right-side face 13b opposed to an entrance door (not shown in the drawings) disposed on the left-side face 13a of the cab 13. The inside of the level gauge 7 is hollow.

The level gauge 7 is provided with a circular protruding portion 7a which protrudes from a side face 5a of the hydraulic oil tank 5 in order to secure the volume of the hydraulic oil tank 5, which is subject to restriction on its shape and size caused by the limited disposition space, as large as possible; and a round window 7b which is disposed on a side face 7e of the protruding portion 7a on the side of the outer cover 4 and is made from a transparent member such that the top surface of the hydraulic oil received in the hydraulic oil tank 5 can be visually checked through the oblong checking hole 4a formed on the outer cover 4 and the inside of which is provided with a star-shaped portion.

At the center of the window 7b, a circular marker 7c which regulates the volume of the hydraulic oil received in the hydraulic oil tank 5 is formed. In other words, providing that the hydraulic oil is received up to the height corresponding to the marker 7c, the hydraulic oil can be supplied to the respective actuators and the return oil from the respective actuators can be recuperated without causing any hitches during the excavation work carried out by the present small-sized hydraulic excavator (e.g. in case where an actuator is of a single rod cylinder type, there arises difference between the supplied volume and the returned volume, but it is arranged herein that the volume enough to counteract such difference can be received in the tank).

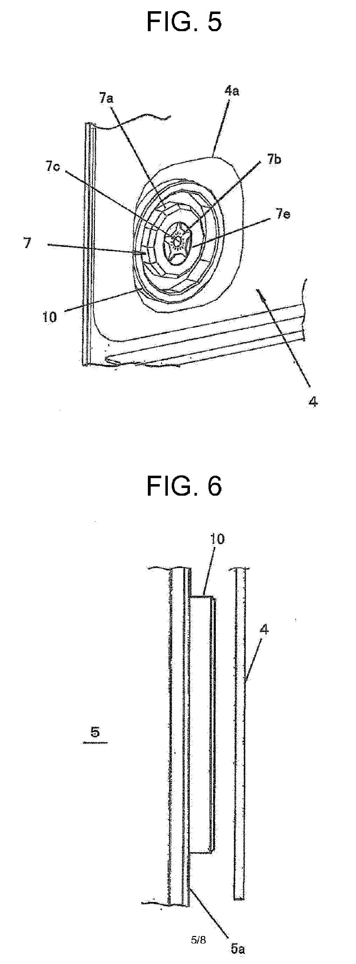

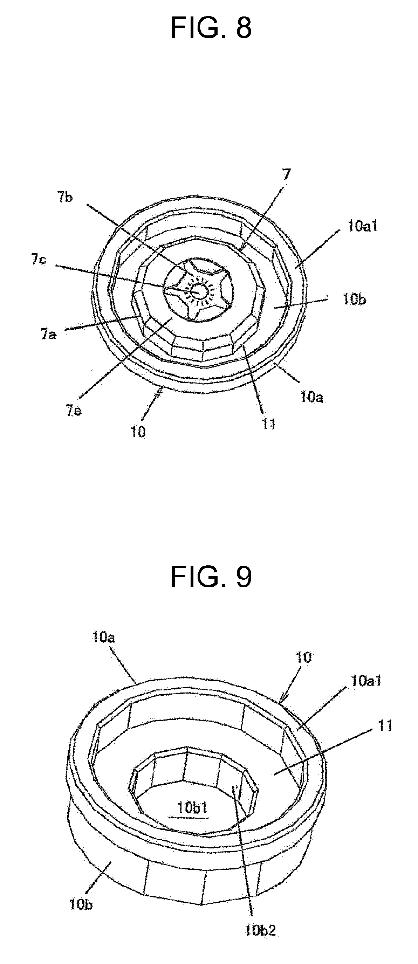

As illustrated in Figs. 5 as well as Figs. 7 to 9, the small-sized hydraulic excavator according to the present embodiment is provided with an attachment member 10 which is fixed to the side face 5a of the hydraulic oil tank 5 and has a circular shape surrounding the periphery of the protruding portion 7a of the level gauge 7 and is formed with such a small shape that it is included within the peripheral scope of the checking hole 4a formed on the outer cover 4 and to which the level gauge 7 is attached.

The attachment member 10 is provided with an annular portion 10a which has a double-circle end face 10a1 on the side of the outer cover 4 and abuts to the side face 5a of the hydraulic oil tank 5 and surrounds the protruding portion 7a of the level gauge 7. Further, the attachment member 10 is provided with a retaining portion 10b which is provided continuously with the annular portion 10a and the dimension of which outside diameter is arranged smaller than the dimension of the outside diameter of the annular portion 10a and which is inserted into an insertion hole 5b formed through the hydraulic oil tank 5 and is provided with a get-through hole 10b1 with a threaded portion 102b formed therein and which retains the level gauge 7. The attachment member 10 is fixed to the side face 5a of the hydraulic oil tank 5 through a welded portion in the state where the retaining portion 10b is inserted into the insertion hole 5b of the hydraulic oil tank 5 and the annular portion 10a abuts to the side face 5a of the hydraulic oil tank 5.

The level gauge 7 is provided with the above-mentioned protruding portion 7a in abutment with the retaining portion 10b of the attachment member 10 and a cylindrical insertion portion 7d which is provided continuously with the protruding portion 7a and is inserted in the get-through hole 10b1 formed on the retaining portion 10b of the attachment member 10 and on the outer circumference of which a threaded portion 7d1 to be screw-mated with the threaded portion 10b2 of the get-through hole 10b1 of the retaining portion 10b is formed. In this way, the insertion portion 7d of the level gauge 7 is attached to the retaining portion 10b of the attachment member 10 with the former rotationally screwed into the latter, but hereupon the window 7b provided on the protruding portion 7a of the level gauge 7 is formed into a round shape provided with a star-shaped portion inside as mentioned above, so that the unshapely impression of the window 7b can be suppressed irrespectively of the level gauge 7 being attached to the attachment member 10 at any rotational angles.

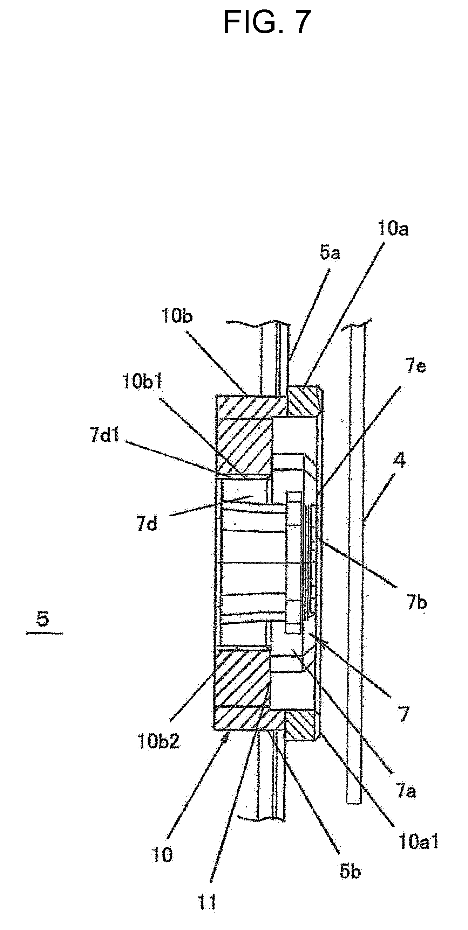

As illustrated in Fig. 7, the position of the retaining portion 10b of the attachment member 10 and the position of an attachment face 11 of the level gauge 7 forming an abutment face with the protruding portion 7a of the level gauge 7 are arranged to the further inner side of the hydraulic oil tank 5 than the side face 5a of the hydraulic oil tank 5.

By arranging the attachment face 11 of the level gauge 7 in this way, the attachment member 10 can be provided such that an end face 10a1 of the attachment member 10 on the side of the outer cover 4 is made flush with the side face 7e of the protruding portion 7a of the level gauge 7 or slightly protrudes from the side face 7e of the protruding portion 7a of the level gauge 7.

Upon the hydraulic oil tank 5 being installed along with various kinds of equipment and machinery within the narrow space corresponding to the widthwise direction of the cab 13 and the outer cover 4 above the revolving frame 2a, when an assembly error of the hydraulic oil tank 5 is relatively smaller, as illustrated in Fig. 7, the level gauge 7 approaches the checking hole 4a of the outer cover 4 in the meantime the state where the attachment member 10 and the level gauge 7 are disposed with a gap between the outer cover 4 and them arises.

In such state, upon the hydraulic oil being received in the hydraulic oil tank 5 with the cap 5c opened, whether or not the top surface of the hydraulic oil reaches the position of the marker 7c of the level gauge 7, in other words, whether or not an optimal volume of the hydraulic oil is received in the hydraulic oil tank 5 can be visually checked in a readily and secure manner through the checking hole 4a of the outer cover 4.

Further, in the state where the attachment member 10 and the level gauge 7 are disposed without protruding from the checking hole 4a of the outer cover 4 as mentioned above, even when an external force is applied to the insertion portion 7d of the level gauge 7 by side face of the small-sized hydraulic excavator possibly making into contact with the branches and twigs of the hedging trees planted in the neighboring houses as the result that excavation work is carried out at the housing lots where houses are lined adjacently to each other, such external force is suppressed by the outer cover 4.

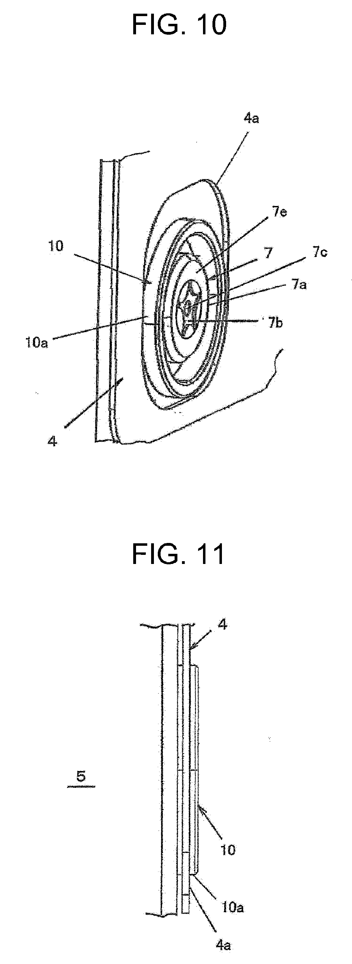

In turn, as illustrated in Figs. 10 and 11, it might happen that the side face 7e of the level gauge 7 protrudes from the checking hole 4a of the outer cover 4 even to a slight degree owing to the assembly error of the hydraulic oil tank 5 resulting from mounting a number of structural parts and members within the limited narrow space corresponding to the widthwise direction of the cab 13 and the outer cover 4 above the revolving frame 2a. Even when such assembly error might happen, according to the present embodiment, since the attachment member 10 to which the level gauge 7 is attached is formed into a shape surrounding the periphery of the protruding portion 7a of the level gauge 7 and its end face 10a1 is made flush with the side face 7e of the protruding portion 7a of the level gauge 7 or protrudes from the side face 7e of the protruding portion 7a of the level gauge 7, the annular portion 10a of the attachment member 10 receives an external force caused by the branches and twigs of the hedging trees planted in the neighboring houses upon excavation work being carried out at the housing lots where houses are lined adjacently to each other so as to suppress damage on the portions including the window 7b of the level gauge 7 susceptible to such external force. In this way, according to the present invention, a highly reliable small-sized hydraulic excavator with the window 7b of the level gauge 7 protected from such external force with higher precision than the conventional counterpart is provided.

### REFERENCE SIGNS LIST

- 1: travel base
- 1a: crawler type travel apparatus
- 1a1: outer side portion
- 2: revolving upperstructure
- 2a: revolving frame
- 2c: swing post
- 3: working machine
- 4: outer cover
- 4a: checking hole
- 5: hydraulic oil tank
- 5a: side face
- 5b: insertion hole
- 5c: cap
- 6e: counterweight
- 7: level gauge
- 7a: protruding portion
- 7b: window
- 7d: insertion portion
- 7d1: threaded portion
- 7e: side face
- 10: attachment member
- 10a: annular portion
- 10a1: end face
- 10b: retaining portion
- 10b1: get-through hole
- 10b2: threaded portion
- 11: attachment face
- 12: driver's seat
- 13: cab
- 14: engine

## Claims

1. A small-sized hydraulic excavator comprising:
a travel base (1);
a revolving upperstructure (2) disposed on the travel base (1);
a working machine (3) attached to a right and left swinging swing post (2c) disposed on a frontal end frame portion (2b) protruding forward from a revolving frame (2a) of the revolving upperstructure (2) such that the working machine (3) is vertically rotatable;
a cab (13) which is disposed on the revolving frame (2a) of the revolving upperstructure (2) from a tip end side of the revolving frame (2a) to its rear side beyond a center at which the revolving frame (2a) revolves and a right and left width of which takes a widthwise shape along a width of the travel base (1);
an outer cover (4) which is disposed from a vicinity of a center of the cab (13) to a counterweight (6e) disposed to a rear end of the revolving upperstructure (2) on the revolving frame (2a) at a rear side of the cab (13), the outer cover forming an engine room;
a hydraulic oil tank (5) which is disposed on the revolving frame (2a) of the revolving upperstructure (2) with a certain clearance with the outer cover (4) of the revolving upperstructure (2) and in which a hydraulic oil to drive the travel base (1), the revolving upperstructure (2) and the working machine (3) is received; and
a level gauge (7) which is disposed on the hydraulic oil tank (5) such that the level gauge (7) is opposed to a checking hole (4a) formed on the outer cover (4) and regulates a volume of the hydraulic oil received in the hydraulic oil tank (5) and whose inside is hollow,
the level gauge (7) including: a protruding portion (7a) jutting out from a side face (5a) of the hydraulic oil tank (5); and a window (7b) which is provided on a side face (7e) of the protruding portion (7a) on a side of the outer cover (4) and enables a top surface of the hydraulic oil received in the hydraulic oil tank (5) to be visually checked though the checking hole (4a) formed through the outer cover (4),
**characterized in that**
the small-sized hydraulic excavator includes an attachment member (10) to which the level gauge (7) is attached,
the attachment member (10) is fixed on the side face (5a) of the hydraulic oil tank (5) and is formed with a shape which surrounds a periphery of the protruding portion (7a) of the level gauge (7) and is smaller than the checking hole (4a) formed through the outer cover (4),
the attachment member (10) is provided such that an end face (10a1) of the attachment member (10) on the side of the outer cover (4) is made flush with the side face (7e) of the protruding portion (7a) of the level gauge (7) or protrudes from the side face (7e) of the protruding portion (7a) of the level gauge (7),
the attachment member (10) includes:
an annular portion (10a) which has the end face (10a1) on the side of the outer cover (4) and abuts to the side face (5a) of the hydraulic oil tank (5); and
a retaining portion (10b) which is provided continuously with the annular portion (10a) and a dimension of which outside diameter is arranged smaller than a dimension of an outside diameter of the annular portion (10a) and which is inserted into an insertion hole (5b) formed through the hydraulic oil tank (5) and is provided with a get-through hole (10b1) with a threaded portion (10b2) formed in the hole (10b1) and which retains the level gauge (7), and
the attachment member (10) is fixed to the side face (5a) of the hydraulic oil tank (5) through a welded portion.

2. The small-sized hydraulic excavator according to claim 1,
wherein the level gauge (7) includes:
the protruding portion (7a) in abutment with the retaining portion (10b) of the attachment member (10); and
an insertion portion (7d) which is provided continuously with the protruding portion (7a) and is inserted in the get-through hole (10b1) formed through the retaining portion (10b) of the attachment member (10) and on an outer circumference of which a threaded portion (7d1) to be screw-mated with a threaded portion (10b2) of the get-through hole (10b1) of the retaining portion (10b) is formed.

3. The small-sized hydraulic excavator according to claim 2, wherein a position of the retaining portion (10b) of the attachment member (10) and a position of an attachment face (11) of the level gauge (7) forming an abutment face with the protruding portion (7a) of the level gauge (7) are arranged to a further inner side of the hydraulic oil tank (5) than the side face (5a) of the hydraulic oil tank (5).

## Patentansprüche

1. Kleiner Hydraulikbagger, umfassend:
eine Fahrbasis (1);
einen oberen Drehaufbau (2), der an der Fahrbasis (1) angeordnet ist;
eine Arbeitsmaschine (3), die an einem rechts und links schwingenden Schwenkpfosten (2c) befestigt ist, der an einem vorderen Endrahmenabschnitt (2b) angeordnet ist, der von einem
Drehrahmen (2a) des oberen Drehaufbaus (2) nach vorn vorsteht, so dass die Arbeitsmaschine (3) vertikal drehbar ist;
eine Kabine (13), die an dem Drehrahmen (2a) des oberen Drehaufbaus (2) von einer Seite des spitzen Endes des Drehrahmens (2a) zu seiner Rückseite jenseits eines Zentrums angeordnet ist, an dem sich der Drehrahmen (2a) dreht und wobei ihre rechte und linke Breite davon entlang einer Breite der Fahrbasis (1) eine Breitenform annimmt;
eine Außenabdeckung (4), die von einer Nähe eines Zentrums der Kabine (13) zu einem Gegengewicht (6e) angeordnet ist, das an einem hinteren Ende des oberen Drehaufbaus (2) an dem drehbaren Rahmen (2a) an einer Rückseite der Kabine (13) angeordnet ist, wobei die Außenabdeckung einen Maschinenraum bildet;
einen Hydrauliköltank (5), der an dem Drehrahmen (2a) des oberen Drehaufbaus (2) mit einem gewissen Abstand zur Außenabdeckung (4) des oberen Drehaufbaus (2) angeordnet ist und in dem ein Hydrauliköl zum Antrieb der Fahrbasis (1), des oberen Drehaufbaus (2) und der Arbeitsmaschine (3) aufgenommen ist; und
eine Füllstandsanzeige (7), die so am Hydrauliköltank (5) angeordnet ist, dass die Füllstandsanzeige (7) einem an der Außenabdeckung (4) ausgebildeten Prüfloch (4a) gegenüberliegt und ein Volumen des Hydrauliköls reguliert, das in dem Hydrauliköltank (5) aufgenommen ist, und dessen Inneres hohl ist,
wobei die Füllstandsanzeige (7) umfasst: einen vorstehenden Abschnitt (7a), der aus einer Seitenfläche (5a) des Hydrauliköltanks (5) herausragt; und ein Fenster (7b), das an einer Seitenfläche (7e) des vorstehenden Abschnitts (7a) an einer Seite der Außenabdeckung (4) vorgesehen ist und ermöglicht, eine obere Fläche des im Hydrauliköltank (5) aufgenommenen Hydrauliköls visuell durch das durch die Außenabdeckung (4) gebildete Prüfloch (4a) zu prüfen,
**dadurch gekennzeichnet, dass**
der kleine Hydraulikbagger ein Befestigungselement (10) aufweist, an dem die Füllstandsanzeige (7) befestigt ist,
das Befestigungselement (10) an der Seitenfläche (5a) des Hydrauliköltanks (5) angebracht und mit einer Form geformt ist, die einen Umfang des vorstehenden Abschnitts (7a) der Füllstandsanzeige (7) umgibt und kleiner als das durch die Außenabdeckung (4) gebildete Prüfloch (4a) ist, das Befestigungselement (10) so vorgesehen ist, dass eine Endfläche (10a1) des Befestigungselements (10) an der Seite der Außenabdeckung (4) bündig mit der Seitenfläche (7e) des vorstehenden Abschnitts (7a) der Füllstandsanzeige (7) ist oder von der Seitenfläche (7e) des vorstehenden Abschnitts (7a) der Füllstandsanzeige (7) vorsteht,
das Befestigungselement (10) umfasst:
einen ringförmigen Abschnitt (10a), der die Endfläche (10a1) an der Seite der Außenabdeckung (4) aufweist und an der Seitenfläche (5a) des Hydrauliköltanks (5) anliegt; und
einen Halteabschnitt (10b), der kontinuierlich mit dem ringförmigen Abschnitt (10a) vorgesehen ist und eine Abmessung seines Außendurchmessers kleiner als eine Abmessung eines Außendurchmessers des ringförmigen Abschnitts (10a) ausgebildet ist und der in ein Einsetzloch (5b) eingesetzt, das durch den Hydrauliköltank (5) geformt ist, und mit einem Durchgangsloch (10b1) mit einem in dem Loch (10b1) ausgebildeten Gewindeabschnitt (10b2) versehen ist, und der die Füllstandsanzeige (7) hält, und
das Befestigungselement (10) an der Seitenfläche (5a) des Hydrauliköltanks (5) durch einen geschweißten Abschnitt angebracht ist.

2. Kleiner Hydraulikbagger nach Anspruch 1,
wobei die Füllstandsanzeige (7) umfasst:
den vorstehenden Abschnitt (7a) in Anlage mit dem Halteabschnitt (10b) des Befestigungselements (10); und
einen Einsetzabschnitt (7d), der kontinuierlich mit dem vorstehenden Abschnitt (7a) vorgesehen und in das Durchgangsloch (10b1) eingesetzt ist, das durch den Halteabschnitt (10b) des Befestigungselements (10) gebildet ist und an dessen Außenumfang ein Gewindeabschnitt (7d1) ausgebildet ist, der mit einem Gewindeabschnitt (10b2) des Durchgangslochs (10b1) des Halteabschnitts (10b) verschraubbar ist.

3. Kleiner Hydraulikbagger nach Anspruch 2, wobei eine Position des Halteabschnitts (10b) des Befestigungselements (10) und eine Position einer Befestigungsfläche (11) der Füllstandsanzeige (7), die eine Anlagefläche mit dem vorstehenden Abschnitt (7a) der Füllstandsanzeige (7) bilden, an einer weiter innenliegenden Seite des Hydrauliköltanks (5) als die Seitenfläche (5a) des Hydrauliköltanks (5) angeordnet ist.

## Revendications

1. Excavateur hydraulique de petite taille, comprenant :
une base de déplacement (1) ;
une structure supérieure rotative (2) disposée sur la base de déplacement (1) ;
une machine de travail (3) attachée à un plot de pivotement gauche et un plot de pivotement droit (2c) disposés sur une portion de châssis à l'extrémité avant (2b) qui se projette vers l'avant depuis un châssis rotatif (2a) de la structure supérieure rotative (2) de telle façon que la machine de travail (3) est capable de rotation en sens vertical ;
une cabine (13) qui est disposée sur le châssis rotatif (2a) de la structure supérieure rotative (2) depuis un côté terminal du châssis rotatif (2a) jusqu'à son côté arrière au-delà d'un centre au niveau duquel le châssis rotatif (2a) est en rotation, et dont une largeur de gauche à droite adopte une forme en largeur le long d'une largeur de la base de déplacement (1) ;
un couvercle extérieur (4) qui est disposé depuis un voisinage d'un centre de la cabine (13) jusqu'à un contrepoids (6e) disposé à une extrémité arrière de la structure supérieure rotative (2) sur le châssis rotatif (2a) au niveau d'un côté arrière de la cabine (13),
le couvercle extérieur formant un compartiment moteur ;
un réservoir à huile hydraulique (5) qui est disposé sur le châssis rotatif (2a) de la structure supérieure rotative (2) avec un certain jeu avec le couvercle extérieur (4) de la structure supérieure rotative (2) et dans lequel est reçue une huile hydraulique destinée à l'entraînement de la base de déplacement (1), de la structure supérieure rotative (2) et de la machine de travail (3) ; et
une jauge de niveau (7) qui est disposée sur le réservoir à huile hydraulique (5) de telle façon que la jauge de niveau (7) est opposée à un trou de contrôle (4a) formé sur le couvercle extérieur (4) et qui régule un volume de l'huile hydraulique reçue dans le réservoir à huile hydraulique (5) et dont l'intérieur est creux,
la jauge de niveau (7) incluant : une portion en projection (7a) qui se projette vers l'extérieur depuis une face latérale (5a) du réservoir à huile hydraulique (5) ; et une fenêtre (7b) qui est prévue sur une face latérale (7e) de la portion en projection (7a) sur un côté du couvercle extérieur (4) et qui permet de contrôler visuellement une surface supérieure de l'huile hydraulique reçue dans le réservoir à huile hydraulique (5), à travers le trou de contrôle (4a) formé à travers le couvercle extérieur (4),
**caractérisé en ce que**
l'excavateur hydraulique de petite taille inclut un élément d'attache (10) auquel est attachée la jauge de niveau (7),
l'élément d'attache (10) est fixé sur la face latérale (5a) du réservoir à huile hydraulique (5) et est formé avec une forme qui entoure une périphérie de la portion en projection (7a) de la jauge de niveau (7), et plus petit que le trou de contrôle (4a) formé à travers le couvercle extérieur (4),
l'élément d'attache (10) est prévu de telle façon qu'une face d'extrémité (10a1) de l'élément d'attache (10) sur le côté du couvercle extérieur (4) est réalisée en affleurement avec la face latérale (7e) de la portion en projection (7a) de la jauge de niveau (7) ou bien se projette depuis la face latérale (7e) de la portion en projection (7a) de la jauge de niveau (7),
l'élément d'attache (10) inclut :
une portion annulaire (10a) qui présente la face d'extrémité (10a1) sur le côté du couvercle extérieur (4) et qui vient buter contre la face latérale (5a) du réservoir à huile hydraulique (5) ; et
une portion de retenue (10b) qui est prévue en continu avec la portion annulaire (10a) et dont le diamètre extérieur a une dimension choisie plus petite qu'une dimension d'un diamètre extérieur de la portion annulaire (10a), et qui est insérée dans un trou d'insertion (5b) formé à travers le réservoir à huile hydraulique (5) et qui est dotée d'un trou de sortie (10d) avec une portion à pas de vis (10b2) formée dans le trou (10b1) et qui retient la jauge de niveau (7), et
l'élément d'attache (10) est fixé sur la face latérale (5a) du réservoir à huile hydraulique (5) par l'intermédiaire d'une portion soudée.

2. Excavateur hydraulique de petite taille selon la revendication 1,
dans laquelle la jauge de niveau (7) inclut :
la portion en projection (7a) en butée avec la portion de retenue (10b) de l'élément d'attache (10) ; et
une portion d'insertion (7d) qui est prévue en continu avec la portion en projection (7a) et qui est insérée dans le trou de sortie (10b1) formé à travers la portion de retenue (10b) de l'élément d'attache (10) et sur une circonférence extérieure de laquelle est formée une portion à pas de vis (7d1) destinée à être accouplée par vissage avec une portion à pas de vis (10b2) du trou de sortie (10b1) de la portion de retenue (10b).

3. Excavateur hydraulique de petite taille selon la revendication 2,
dans laquelle une position de la portion de retenue (10b) de l'élément d'attache (10) et une position d'une face d'attache (11) de la jauge de niveau (7) formant une face de butée avec la portion en projection (7a) de la jauge de niveau (7) sont agencées sur un côté du réservoir à huile hydraulique (5) plus loin à l'intérieur que la face latérale (5a) du réservoir à huile hydraulique (5).
